# EUROPEAN PATENT APPLICATION

(11) **EP 4 393 317 A1**
(43) Date of publication of application: **03.07.2024**
(21) Application number: 22852874.1
(22) Date of filing: 25.07.2022
(51) Int. Cl.: A23J 3/14, A23J 3/16, A23J 3/18, A23L 13/00, A23L 13/40, A23L 13/60, A23L 35/00

(54) **METHOD FOR PRODUCING TEXTURED VEGETABLE-DERIVED PROTEIN COMPLEX FOOD, AND TEXTURED VEGETABLE-DERIVED PROTEIN COMPLEX FOOD**

(30) Priority: 02.08.2021 JP 2021126568
(71) Applicant: Nissui Corporation, Tokyo 105-8676 (JP)
(72) Inventor: HORIUCHI Yu, Hachioji-shi, Tokyo 192-0991 (JP); YOKOTA Nobuhiro, Hachioji-shi, Tokyo 192-0991 (JP)
(74) Representative: Mewburn Ellis LLP
(86) International application number: PCT/JP2022/028568
(87) International publication number: WO 2023/013450

(57) **Abstract**

Provided is a production method for a textured vegetable protein composite food, wherein the production method enables production of a textured vegetable protein composite food with improved texture; and provided is a textured vegetable protein composite food with improved texture. The production method for a textured vegetable protein composite food, which contains a water-absorbable polysaccharide thickener and a water-absorbable textured vegetable protein, includes: (1) a step of allowing the water-absorbable polysaccharide thickener to absorb water by adding water thereto in the absence of the water-absorbable textured vegetable protein to give a hydrated polysaccharide thickener; and (2) a step of adding the water-absorbable textured vegetable protein to the hydrated polysaccharide thickener and mixing together to give a textured vegetable protein composite, wherein, in the step (1), 80% by mass or more of water to be used in the step (1) is added to 1 kg or more of the water-absorbable polysaccharide thickener within 30 seconds.

## Description

### Technical Field

The present disclosure relates to a production method for a textured vegetable protein composite food, and a textured vegetable protein composite food.

### Background Art

Demand for processed meat-like foods such that the meat in a processed meat food is at least partly substituted with vegetable protein (hereinafter, occasionally referred to as "processed meat-like foods", simply) has been recently increasing because of growing health consciousness and the viewpoint of reduction of environmental burdens. Existing processed meat-like foods include foods containing a textured vegetable protein composite containing a polysaccharide thickener having water absorbability (hereinafter, occasionally referred to as a "water-absorbable polysaccharide thickener") such as methylcellulose and a textured vegetable protein having water absorbability (hereinafter, occasionally referred to as a "water-absorbable textured vegetable protein") (hereinafter, occasionally referred to as "textured vegetable protein composite foods"). Water-absorbable polysaccharide thickeners are mixed in textured vegetable protein composite foods for the purpose of, for example, making the textures of processed meat-like foods close to those of processed meat foods produced from meat as a main raw material (e.g., Non Patent Literature 1).

In producing a textured vegetable protein composite food, a water-absorbable polysaccharide thickener and a water-absorbable textured vegetable protein are typically mixed together with water. At that time, aggregates primarily of the water-absorbable polysaccharide thickener tend to be generated because of the difference in water absorption rates between the water-absorbable polysaccharide thickener and the water-absorbable textured vegetable protein. Such aggregates contribute to deterioration of texture in textured vegetable protein composite foods.

### Document List

### Non Patent Literature

Non Patent Literature 1: "METOLOSE Food Grade", [online], Shin-Etsu Chemical Co., Ltd., [searched on July 16, 2021], Internet, URL https://www.metolose.jp/food/about.html

### Summary of Invention

### Technical Problem

The present disclosure relates to providing a production method for a textured vegetable protein composite food, wherein the production method enables production of a textured vegetable protein composite food with improved texture. In addition, the present disclosure relates to providing a textured vegetable protein composite food with improved texture.

### Solution to Problem

Embodiments of the present disclosure are as follows.
[1] A production method for a textured vegetable protein composite food containing a water-absorbable polysaccharide thickener and a water-absorbable textured vegetable protein, the production method including: (1) a step of allowing the water-absorbable polysaccharide thickener to absorb water by adding water thereto in the absence of the water-absorbable textured vegetable protein to give a hydrated polysaccharide thickener; and (2) a step of adding the water-absorbable textured vegetable protein to the hydrated polysaccharide thickener and mixing together to give a textured vegetable protein composite, wherein, in the step (1), 80% by mass or more of water to be used in the step (1) is added to 1 kg or more of the water-absorbable polysaccharide thickener within 30 seconds.
[2] The production method according to [1], wherein the amount of water to be added in the step (1), A, is 10 to 500 parts by mass per part by mass of the water-absorbable polysaccharide thickener to be used in the step (1).
[3] The production method according to [1] or [2], wherein the water-absorbable polysaccharide thickener is powdery.
[4] The production method according to any one of [1] to [3], wherein the water-absorbable polysaccharide thickener contains at least one selected from the group consisting of methylcellulose, hydroxypropylmethylcellulose, pectin, carrageenan, xanthan gum, agar, guar gum, gum arabic, and sodium alginate.
[5] The production method according to any one of [1] to [4], wherein the water-absorbable polysaccharide thickener has thermal gelling ability as a property to gel on being heated in an aqueous solution.
[6] The production method according to any one of [1] to [5], wherein the viscosity of the water-absorbable polysaccharide thickener at 20°C when being formulated as a 2% by mass aqueous solution is 2000 mm²/s or more.
[7] The production method according to any one of [1] to [6], wherein the water-absorbable textured vegetable protein contains a granular vegetable protein or a fibrous vegetable protein.
[8] The production method according to any one of [1] to [7], wherein the water-absorbable textured vegetable protein contains a textured vegetable protein derived from soy, peas, wheat, or a combination of any of them.
[9] The production method according to any one of [1] to [8], wherein water is added in the step (2).
[10] The production method according to [9], wherein, in the step (2), the water-absorbable textured vegetable protein is allowed to absorb water in advance by adding water thereto to give a hydrated textured vegetable protein, and the hydrated textured vegetable protein is then added to the hydrated polysaccharide thickener and mixed together to give the textured vegetable protein composite.
[11] The production method according to [9] or [10], wherein the total amount of water to be added in the step (2), B, is 0.5 to 20 parts by mass per part by mass of the water-absorbable textured vegetable protein to be used in the step (2).
[12] The production method according to any one of [9] to [11], wherein the amount of water to be added in the step (1), A, and the total amount of water to be added in the step (2), B, satisfy A:B = 4.5:5.5 to 9.9:0.1 in a mass ratio.
[13] The production method according to any one of [1] to [12], wherein the amount of the water-absorbable polysaccharide thickener to be used in the step (1) is 0.02 to 0.6 parts by mass per part by mass of the water-absorbable textured vegetable protein to be used in the step (2).
[14] The production method according to any one of [1] to [13], including no heating step for the water-absorbable polysaccharide thickener before the step (2) is completed, and the textured vegetable protein composite food remains unheated after addition of the water-absorbable polysaccharide thickener.
[15] The production method according to any one of [1] to [14], further including a step of heating the textured vegetable protein composite after the step (2).
[16] The production method according to [15], wherein, before the heating, the textured vegetable protein composite contains 0.1 to 2% by mass of the water-absorbable polysaccharide thickener used in the step (1).
[17] The production method according to [15] or [16], wherein, before the heating, the textured vegetable protein composite contains 1 to 20% by mass of the water-absorbable textured vegetable protein used in the step (2).
[18] The production method according to any one of [1] to [17], wherein, in the step (1), mixing is performed by using one or more methods selected from the group consisting of a method with a mixing stirrer, a method of stirring at a stirring speed of 30 rotations/min or less, and a method of employing a stirring time of 15 minutes or less while and/or after the water-absorbable polysaccharide thickener is allowed to absorb water by adding water thereto.
[19] The production method according to any one of [1] to [18], wherein the textured vegetable protein composite food is a processed meat-like food.
[20] The production method according to [19], wherein the processed meat-like food is for substituting for a processed meat food containing meat.
[21] The production method according to any one of [1] to [20], including a step of additionally mixing at least one selected from the group consisting of fruit juice, a vegetable, starch, fat or oil, a seasoning, a spice, a dye, a flavor, and an enzyme.
[22] A textured vegetable protein composite food produced by the production method according to any one of [1] to [21].
[23] A production method for a textured vegetable protein composite food containing a water-absorbable polysaccharide thickener and a water-absorbable textured vegetable protein, the production method including: (1) a step of allowing the water-absorbable polysaccharide thickener to absorb water by adding water thereto in the absence of the water-absorbable textured vegetable protein to give a hydrated polysaccharide thickener; and (2) a step of adding the water-absorbable textured vegetable protein and water to the hydrated polysaccharide thickener and mixing together to give a textured vegetable protein composite, wherein, in the step (2), water is (a) added as a hydrated textured vegetable protein given in advance by allowing the water-absorbable textured vegetable protein to absorb water to the hydrated polysaccharide thickener, and/or (b) added to the hydrated polysaccharide thickener simultaneously with the water-absorbable textured vegetable protein, and/or (c) added to the hydrated polysaccharide thickener after addition of the water-absorbable textured vegetable protein, and the amount of water to be added in the step (1), A, and the total amount of water to be added in the step (2), B, satisfy A:B = 4.5:5.5 to 9.9:0.1 in a mass ratio.
[24] The production method according to [23], wherein the amount of water to be added in the step (1), A, is 10 to 500 parts by mass per part by mass of the water-absorbable polysaccharide thickener to be used in the step (1).
[25] The production method according to [23] or [24], wherein the water-absorbable polysaccharide thickener is powdery.
[26] The production method according to any one of [23] to [25], wherein the water-absorbable polysaccharide thickener contains at least one selected from the group consisting of methylcellulose, hydroxypropylmethylcellulose, pectin, carrageenan, xanthan gum, agar, guar gum, gum arabic, and sodium alginate.
[27] The production method according to any one of [23] to [26], wherein the water-absorbable polysaccharide thickener has thermal gelling ability as a property to gel on being heated in an aqueous solution.
[28] The production method according to any one of [23] to [27], wherein the viscosity of the water-absorbable polysaccharide thickener at 20°C when being formulated as a 2% by mass aqueous solution is 2000 mm²/s or more.
[29] The production method according to any one of [23] to [28], wherein the water-absorbable textured vegetable protein contains a granular vegetable protein or a fibrous vegetable protein.
[30] The production method according to any one of [23] to [29], wherein the water-absorbable textured vegetable protein contains a textured vegetable protein derived from soy, peas, wheat, or a combination of any of them.
[31] The production method according to any one of [23] to [30], wherein the total amount of water to be added in the step (2), B, is 0.5 to 20 parts by mass per part by mass of the water-absorbable textured vegetable protein to be used in the step (2).
[32] The production method according to any one of [23] to [31], wherein, in the step (1), 80% by mass or more of water to be used in the step (1) is added to 1 kg or more of the water-absorbable polysaccharide thickener within 30 seconds.
[33] The production method according to any one of [23] to [32], wherein the amount of the water-absorbable polysaccharide thickener to be used in the step (1) is 0.02 to 0.6 parts by mass per part by mass of the water-absorbable textured vegetable protein to be used in the step (2).
[34] The production method according to any one of [23] to [33], including no heating step for the water-absorbable polysaccharide thickener before the step (2) is completed, and the textured vegetable protein composite food remains unheated after addition of the water-absorbable polysaccharide thickener.
[35] The production method according to any one of [23] to [34], further including a step of heating the textured vegetable protein composite after the step (2).
[36] The production method according to [35], wherein, before the heating, the textured vegetable protein composite contains 0.1 to 2% by mass of the water-absorbable polysaccharide thickener used in the step (1).
[37] The production method according to [35] or [36], wherein, before the heating, the textured vegetable protein composite contains 1 to 20% by mass of the water-absorbable textured vegetable protein added in the step (2).
[38] The production method according to any one of [23] to [37], wherein, in the step (1), mixing is performed by using one or more methods selected from the group consisting of a method with a mixing stirrer, a method of stirring at a stirring speed of 30 rotations/min or less, and a method of employing a stirring time of 15 minutes or less while and/or after the water-absorbable polysaccharide thickener is allowed to absorb water by adding water thereto.
[39] The production method according to any one of [23] to [38], wherein the textured vegetable protein composite food is a processed meat-like food.
[40] The production method according to [39], wherein the processed meat-like food is for substituting for a processed meat food containing meat.
[41] The production method according to any one of [23] to [40], including a step of additionally mixing at least one selected from the group consisting of fruit juice, a vegetable, starch, fat or oil, a seasoning, a spice, a dye, a flavor, and an enzyme.
[42] A textured vegetable protein composite food produced by the production method according to any one of [23] to [41].
[43] A textured vegetable protein composite food containing a water-absorbable polysaccharide thickener and a water-absorbable textured vegetable protein, wherein, when the textured vegetable protein composite food is formed into a disk having a diameter of 10 mm and a thickness of 1 mm, the number of aggregates of the water-absorbable polysaccharide thickener with a grain size of 0.1 mm or more as observed in one plane is four or less.
[44] The textured vegetable protein composite food according to [43], wherein the number of the aggregates is number determined with use of an optical microscope.
[45] The textured vegetable protein composite food according to [43] or [44], wherein the water-absorbable polysaccharide thickener contains at least one selected from the group consisting of methylcellulose, hydroxypropylmethylcellulose, pectin, carrageenan, xanthan gum, agar, guar gum, gum arabic, and sodium alginate.
[46] The textured vegetable protein composite food according to any one of [43] to [45], wherein the water-absorbable polysaccharide thickener has thermal gelling ability as a property to gel on being heated in an aqueous solution.
[47] The textured vegetable protein composite food according to any one of [43] to [46], wherein the viscosity of the water-absorbable polysaccharide thickener at 20°C when being formulated as a 2% by mass aqueous solution is 2000 mm²/s or more.
[48] The textured vegetable protein composite food according to any one of [43] to [47], wherein the water-absorbable textured vegetable protein contains a granular vegetable protein or a fibrous vegetable protein.
[49] The textured vegetable protein composite food according to any one of [43] to [48], wherein the water-absorbable textured vegetable protein contains a textured vegetable protein derived from soy, peas, wheat, or a combination of any of them.
[50] The textured vegetable protein composite food according to any one of [43] to [49], containing 0.1 to 2% by mass of the water-absorbable polysaccharide thickener.
[51] The textured vegetable protein composite food according to any one of [43] to [50], containing 1 to 20% by mass of the water-absorbable textured vegetable protein.
[52] The textured vegetable protein composite food according to any one of [43] to [51], being a processed meat-like food.
[53] The textured vegetable protein composite food according to [52], wherein the processed meat-like food is for substituting for a processed meat food containing meat.
[54] The textured vegetable protein composite food according to any one of [43] to [53], being unheated.
[55] The textured vegetable protein composite food according to any one of [43] to [54], further containing at least one selected from the group consisting of water, fruit juice, a vegetable, starch, fat or oil, a seasoning, a spice, a dye, a flavor, and an enzyme.

### Description of Embodiments

### [Production Method 1 for Textured Vegetable Protein Composite Food]

In the present disclosure, the textured vegetable protein composite food is a food containing a textured vegetable protein composite containing a water-absorbable polysaccharide thickener and a water-absorbable textured vegetable protein.

One of production methods of the present disclosure for a textured vegetable protein composite food (hereinafter, occasionally referred to as "Production Method 1") includes:
(1) a step of allowing the water-absorbable polysaccharide thickener to absorb water by adding water thereto in the absence of the water-absorbable textured vegetable protein to give a water-absorbable polysaccharide thickener after absorbing water (hereinafter, occasionally referred to as a "hydrated polysaccharide thickener") (step (1)); and
(2) a step of adding the water-absorbable textured vegetable protein to the hydrated polysaccharide thickener and mixing together to give a textured vegetable protein composite (step (2)).

In the step (1), 80% by mass or more of water to be used in the step (1) is added to 1 kg or more of the water-absorbable polysaccharide thickener within 30 seconds. In the case that about 100 g of the water-absorbable polysaccharide thickener is allowed to absorb water by adding water thereto in a small-scale facility such as a laboratory, for example, adding most of the water to be used at once is not difficult. For factory scale, specifically, in the case that 1 kg or more of the water-absorbable polysaccharide thickener is allowed to absorb water by adding water thereto, on the other hand, the amount of water to be used is larger, and hence, because of the capacity of a facility, water is typically added in a plurality of separate small portions, or, possibly, gradually added over a relatively long time.

On the contrary, the present inventors have found that, even in producing a textured vegetable protein composite food on factory scale, the texture of the ultimate textured vegetable protein composite food is better if the production process is separated into the steps (1) and (2) and water to be used is added rather quickly in the step (1).

Here, "80% by mass or more of water is added within 30 seconds" means that 80% by mass or more of water to be used in the step (1) has been already added 30 seconds after starting the addition of water. Here, 80% by mass or more of water to be used may be added within 25 seconds, 80% by mass or more of water to be used may be added within 20 seconds, 90% by mass or more of water to be used may be added within 30 seconds, 90% by mass or more of water to be used may be added within 25 seconds, 90% by mass or more of water to be used may be added within 20 seconds, the whole amount of water to be used may be added within 30 seconds, the whole amount of water to be used may be added within 25 seconds, and the whole amount of water to be used may be added within 20 seconds.

The amount of water to be added in the step (1), A, may be 10 parts by mass or more, 15 parts by mass or more, 20 parts by mass or more, 25 parts by mass or more, 30 parts by mass or more, or 35 parts by mass or more per part by mass of the water-absorbable polysaccharide thickener to be used in the step (1).

The amount of water to be added in the step (1), A, may be 500 parts by mass or less, 400 parts by mass or less, 300 parts by mass or less, 200 parts by mass or less, 100 parts by mass or less, 80 parts by mass or less, 60 parts by mass or less, or 55 parts by mass or less per part by mass of the water-absorbable polysaccharide thickener to be used in the step (1).

Any upper limit value and lower limit value of the amount of water to be added in the step (1), A, to the amount of the water-absorbable polysaccharide thickener to be used in the step (1) can be combined within the scope of the present disclosure. Typically, if the amount of water to be added in the step (1), A, to the amount of the water-absorbable polysaccharide thickener to be used in the step (1) is within a proper range, the texture of the textured vegetable protein composite food is much better.

The form of the water-absorbable polysaccharide thickener is not limited, and the water-absorbable polysaccharide thickener may be, for example, powdery.

The type of the water-absorbable polysaccharide thickener is not limited, and the water-absorbable polysaccharide thickener may contain, for example, at least one selected from the group consisting of methylcellulose, hydroxypropylmethylcellulose, pectin, carrageenan, xanthan gum, agar, guar gum, gum arabic, and sodium alginate, and may contain methylcellulose or hydroxypropylmethylcellulose. As the water-absorbable polysaccharide thickener, one water-absorbable polysaccharide thickener may be used alone, and two or more water-absorbable polysaccharide thickeners may be used in combination.

The water-absorbable polysaccharide thickener may have a property to gel on being heated in an aqueous solution (thermal gelling ability). Typically, if the water-absorbable polysaccharide thickener has thermal gelling ability, the texture of the textured vegetable protein composite food is much better after heated.

The viscosity of the water-absorbable polysaccharide thickener at 20°C when being formulated as a 2% by mass aqueous solution may be 2000 mm²/s or more, 3000 mm²/s or more, 5000 mm²/s or more, 10000 mm²/s or more, 50000 mm²/s or more, or 100000 mm²/s or more.

The viscosity of the water-absorbable polysaccharide thickener at 20°C when being formulated as a 2% by mass aqueous solution may be 300000 mm²/s or less, 200000 mm²/s or less, 180000 mm²/s or less, or 160000 mm²/s or less.

Any upper limit value and lower limit value of the viscosity of the water-absorbable polysaccharide thickener at 20°C when being formulated as a 2% by mass aqueous solution can be combined within the scope of the present disclosure. Typically, if the viscosity of the water-absorbable polysaccharide thickener at 20°C when being formulated as a 2% by mass aqueous solution is within a proper range, the texture of the textured vegetable protein composite food is much better.

The type of the water-absorbable textured vegetable protein is not limited, and, for example, a granular vegetable protein or a fibrous vegetable protein can be used. Herein, definitions in accordance with Japanese Agricultural Standards by Ministry of Agriculture, Forestry and Fisheries are used for the terms "granular vegetable protein" and "fibrous vegetable protein". Specifically, "granular vegetable proteins" herein refer to vegetable proteins formed into granules or flakes and having meat-like structure. "Fibrous vegetable proteins" herein refer to vegetable proteins formed into fibers and having meat-like structure.

As the water-absorbable textured vegetable protein, a water-absorbable textured vegetable protein derived from soy, peas, wheat, or a combination of any of them can be used. Water-absorbable textured vegetable proteins derived from soy, peas, wheat, or a combination of any of them have been demonstrated to be safe and are easy to use. Typically, water-absorbable textured vegetable proteins derived from soy have an advantage of easiness in forming structure.

As the water-absorbable textured vegetable protein, one water-absorbable textured vegetable protein may be used alone, and two or more water-absorbable textured vegetable proteins may be used in combination.

In the step (2), water may be further added in addition to the water-absorbable textured vegetable protein. In the case that water is added in the step (2), water may be (a) added as a hydrated textured vegetable protein given in advance by allowing the water-absorbable textured vegetable protein to absorb water to the hydrated polysaccharide thickener, or (b) added to the hydrated polysaccharide thickener simultaneously with the water-absorbable textured vegetable protein, or (c) added to the hydrated polysaccharide thickener after addition of the water-absorbable textured vegetable protein, and these modes (a) to (c) may be combined.

In the case of (a), specifically, in the step (2), the water-absorbable textured vegetable protein is allowed to absorb water in advance by adding water thereto to give a hydrated textured vegetable protein, which may be then added to the hydrated polysaccharide thickener and mixed together to give the textured vegetable protein composite.

In the case that water is added in the step (2), the total amount of water to be added, B, may be 0.5 parts by mass or more, 0.6 parts by mass or more, 0.7 parts by mass or more, 0.8 parts by mass or more, 0.9 parts by mass or more, or 1 part by mass or more per part by mass of the water-absorbable textured vegetable protein to be used in the step (2).

In the case that water is added in the step (2), the total amount of water to be added, B, may be 20 parts by mass or less, 10 parts by mass or less, 7 parts by mass or less, 5 parts by mass or less, 4 parts by mass or less, or 3 parts by mass or less per part by mass of the water-absorbable textured vegetable protein to be used in the step (2).

In the case that water is added in the step (2), any upper limit value and lower limit value of the total amount of water to be added, B, to the amount of the water-absorbable textured vegetable protein to be used in the step (2) can be combined within the scope of the present disclosure. Typically, if the total amount of water to be added, B, to the amount of the water-absorbable textured vegetable protein to be used in the step (2) is within a proper range, the texture of the textured vegetable protein composite food is much better.

In the case that water is added in the step (2), the ratio between the amount of water to be added in the step (1), A, and the total amount of water to be added in the step (2), B, may be A:B = 4.5:5.5 to 9.9:0.1, A:B = 5.5:4.5 to 9.5:0.5, or A:B = 6.5:3.5 to 9.2:0.8 in a mass ratio. Typically, if the ratio is within a proper range, the texture of the textured vegetable protein composite food is much better.

The amount of the water-absorbable polysaccharide thickener to be used in the step (1) may be 0.02 parts by mass or more, 0.05 parts by mass or more, 0.1 parts by mass or more, 0.2 parts by mass or more, or 0.25 parts by mass or more per part by mass of the water-absorbable textured vegetable protein to be used in the step (2).

The amount of the water-absorbable polysaccharide thickener to be used in the step (1) may be 0.6 parts by mass or less, 0.5 parts by mass or less, or 0.4 parts by mass or less per part by mass of the water-absorbable textured vegetable protein to be used in the step (2).

Any upper limit value and lower limit value of the amount of the water-absorbable polysaccharide thickener to be used in the step (1) to the amount of the water-absorbable textured vegetable protein to be used in the step (2) can be combined within the scope of the present disclosure. Typically, if the amount of the water-absorbable polysaccharide thickener to be used in the step (1) to the amount of the water-absorbable textured vegetable protein to be used in the step (2) is within a proper range, the texture of the textured vegetable protein composite food is much better.

Production Method 1 may include no heating step for the water-absorbable polysaccharide thickener before the step (2) is completed, and the resulting textured vegetable protein composite food may remain unheated after addition of the water-absorbable polysaccharide thickener.

Production Method 1 may further include a step of heating (or baking) the textured vegetable protein composite after the step (2).

Before the heating, the textured vegetable protein composite may contain 0.1% by mass or more, 0.3% by mass or more, 0.5% by mass or more, 0.7% by mass or more, or 0.9% by mass or more of the water-absorbable polysaccharide thickener used in the step (1).

Before the heating, the textured vegetable protein composite may contain 2% by mass or less, 1.8% by mass or less, 1.6% by mass or less, 1.4% by mass or less, or 1.2% by mass or less of the water-absorbable polysaccharide thickener used in the step (1).

Any upper limit value and lower limit value of the amount of the water-absorbable polysaccharide thickener used in the step (1) and contained in the textured vegetable protein composite before the heating can be combined within the scope of the present disclosure. Typically, if the amount of the water-absorbable polysaccharide thickener is within a proper range, the texture of the textured vegetable protein composite food is much better.

Before the heating, the textured vegetable protein composite may contain 1% by mass or more, 2% by mass or more, or 3% by mass or more of the water-absorbable textured vegetable protein used in the step (2).

Before the heating, the textured vegetable protein composite may contain 20% by mass or less, 15% by mass or less, 10% by mass or less, or 5% by mass or less of the water-absorbable textured vegetable protein used in the step (2).

Any upper limit value and lower limit value of the amount of the water-absorbable textured vegetable protein used in the step (2) and contained in the textured vegetable protein composite before the heating can be combined within the scope of the present disclosure. Typically, if the amount of the water-absorbable textured vegetable protein is within a proper range, the texture of the textured vegetable protein composite food is much better.

In the step (1), mixing may be performed while and/or after the water-absorbable polysaccharide thickener is allowed to absorb water by adding water thereto. The mixing method is not limited, and a mild mixing method, specifically, a method with reduced generation of heat may be selected. Examples of such methods include a method of mixing not by using a mixing machine having a cutter that generates cross sections along the stirring direction, but by using a mixing stirrer. Examples of the mixing machine having a cutter that generates cross sections along the stirring direction include silent cutters. Examples of the mixing stirrer include paddle mixers and mixers. In addition, a method of adjusting stirring speed and/or stirring time to prevent the oxidation of the water-absorbable polysaccharide thickener and/or the hydrated polysaccharide thickener through the contact with air may be selected. Stirring speed refers to the maximum speed of a stirring blade to be used in stirring, and, for stirring in circular motion by rotation, corresponds to the number of rotations of the rotational axis per unit time. For mild mixing, the stirring speed may be 30 rotations/min or less, 15 rotations/min or less, or 5 rotations/min or less. For sufficient mixing, the stirring speed may be 1 rotation/min or more or 4 rotations/min or more. For mild mixing, the stirring time may be within 15 minutes, within 10 minutes, or within 5 minutes. For sufficient mixing, the stirring time may be 30 seconds or more or 1 minute or more. If the water-absorbable polysaccharide thickener is very quickly contacted with moisture, then only the surface of the water-absorbable polysaccharide thickener absorbs water to become a film, and elastic, granular aggregates derived from the water-absorbable polysaccharide thickener may form. The formation of aggregates derived from the water-absorbable polysaccharide thickener can be prevented by employing a mild mixing method. Typically, if a mild mixing method is employed, the texture of the textured vegetable protein composite food is much better.

The textured vegetable protein composite food to be produced by Production Method 1 is typically a food such that the meat of a processed meat food, such as hamburger steak, meatballs, Chinese dumplings, meatloaf, and tsukune (Japanese grilled chicken meatballs), is at least partly substituted with vegetable protein (processed meat-like food). The processed meat-like food may be for substituting for a processed meat food containing, for example, at least one meat selected from the group consisting of beef, pork, horsemeat, mutton, chevon, and chicken.

Production Method 1 may include a step of additionally mixing at least one selected from the group consisting of fruit juice, a vegetable, starch, fat or oil, a seasoning, a spice, a dye, a flavor, and an enzyme. The step may be performed simultaneously with the step (1) and/or the step (2), or before the step (1), or between the step (1) and the step (2), or after the step (2). The step may be performed a plurality of times at different timings.

The textured vegetable protein composite food produced by Production Method 1 has improved texture. One of causes inferred for the achievement of improved texture is that generation of aggregates of the water-absorbable polysaccharide thickener is prevented. However, the prevention of generation of the aggregates is only one of effects given by Production Method 1. Moreover, texture is an index relying on the excellent tactile sensation, gustatory sensation, and olfactory sensation of humans, and sensitively affected by the states of many raw materials, the state of interaction of raw materials, trace components below detection limits, and others. Accordingly, directly identifying the textured vegetable protein composite food produced by Production Method 1 by structure or properties is seemed to be very difficult and impractical.

### [Production Method 2 for Textured Vegetable Protein Composite Food]

Another of production methods of the present disclosure for a textured vegetable protein composite food (hereinafter, occasionally referred to as "Production Method 2") includes:
(1) a step of allowing the water-absorbable polysaccharide thickener to absorb water by adding water thereto in the absence of the water-absorbable textured vegetable protein to give a hydrated polysaccharide thickener (step (1)); and
(2) a step of adding the water-absorbable textured vegetable protein and water to the hydrated polysaccharide thickener and mixing together to give a textured vegetable protein composite (step (2)).

In the step (2), water may be (a) added as a hydrated textured vegetable protein given in advance by allowing the water-absorbable textured vegetable protein to absorb water to the hydrated polysaccharide thickener, or (b) added to the hydrated polysaccharide thickener simultaneously with the water-absorbable textured vegetable protein, or (c) added to the hydrated polysaccharide thickener after addition of the water-absorbable textured vegetable protein, and these modes (a) to (c) may be combined.

In Production Method 2, the amount of water to be added in the step (1), A, and the total amount of water to be added in the step (2), B, satisfy A:B = 4.5:5.5 to 9.9:0.1 in a mass ratio. The present inventors have found that if the mass ratio between the amount of water to be added in the step (1), A, and the total amount of water to be added in the step (2), B, is within a proper range, the texture of the textured vegetable protein composite food is much better.

The ratio between the amount of water to be added in the step (1), A, and the total amount of water to be added in the step (2), B, may be A:B = 5.5:4.5 to 9.5:0.5 or A:B = 6.5:3.5 to 9.2:0.8 in a mass ratio.

For the amount of water to be added in the step (1), A, to the amount of the water-absorbable polysaccharide thickener to be used in the step (1), and the total amount of water to be added in the step (2), B, to the amount of the water-absorbable textured vegetable protein to be used in the step (2), the contents described above for Production Method 1 can be directly applied to Production Method 2.

For the water-absorbable polysaccharide thickener and the textured vegetable protein, the same ones as described above for Production Method 1 can be applied to Production Method 2.

In the step (1), 80% by mass or more of water to be used in the step (1) may be added to 1 kg or more of the water-absorbable polysaccharide thickener within 30 seconds. Here, "80% by mass or more of water is added within 30 seconds" means that 80% by mass or more of water to be used in the step (1) has been already added 30 seconds after starting the addition of water. Here, 80% by mass or more of water to be used may be added within 25 seconds, 80% by mass or more of water to be used may be added within 20 seconds, 90% by mass or more of water to be used may be added within 30 seconds, 90% by mass or more of water to be used may be added within 25 seconds, 90% by mass or more of water to be used may be added within 20 seconds, the whole amount of water to be used may be added within 30 seconds, the whole amount of water to be used may be added within 25 seconds, and the whole amount of water to be used may be added within 20 seconds. If the speed of addition of water is within a proper range, the texture of the ultimate textured vegetable protein composite food is much better.

For the amount of the water-absorbable polysaccharide thickener to be used in the step (1) to the amount of the water-absorbable textured vegetable protein to be used in the step (2), the contents described above for Production Method 1 can be directly applied to Production Method 2.

Production Method 2 may include no heating step for the water-absorbable polysaccharide thickener before the step (2) is completed, and the resulting textured vegetable protein composite food may remain unheated after addition of the water-absorbable polysaccharide thickener.

Production Method 2 may further include a step of heating (or baking) the textured vegetable protein composite after the step (2).

For the amount of the water-absorbable polysaccharide thickener used in the step (1) and contained in the textured vegetable protein composite before the heating, and the amount of the water-absorbable textured vegetable protein used in the step (2) and contained in the textured vegetable protein composite before the heating, the contents described above for Production Method 1 can be directly applied to Production Method 2.

In the step (1), mixing may be performed while and/or after the water-absorbable polysaccharide thickener is allowed to absorb water by adding water thereto. For the mixing method, the contents described above for Production Method 1 can be directly applied.

The textured vegetable protein composite food to be produced by Production Method 2 is typically a food such that the meat of a processed meat food, such as hamburger steak, meatballs, Chinese dumplings, meatloaf, and tsukune, is at least partly substituted with vegetable protein (processed meat-like food). The processed meat-like food may be for substituting for a processed meat food containing, for example, at least one meat selected from the group consisting of beef, pork, horsemeat, mutton, chevon, and chicken.

Production Method 2 may include a step of additionally mixing at least one selected from the group consisting of fruit juice, a vegetable, starch, fat or oil, a seasoning, a spice, a dye, a flavor, and an enzyme. The step may be performed simultaneously with the step (1) and/or the step (2), or before the step (1), or between the step (1) and the step (2), or after the step (2). The step may be performed a plurality of times at different timings.

The textured vegetable protein composite food produced by Production Method 2 has improved texture. One of causes inferred for the achievement of improved texture is that generation of aggregates of the water-absorbable polysaccharide thickener is prevented. However, the prevention of generation of the aggregates is only one of effects given by Production Method 2. Moreover, texture is an index relying on the excellent tactile sensation, gustatory sensation, and olfactory sensation of humans, and sensitively affected by the states of many raw materials, the state of interaction of raw materials, trace components below detection limits, and others. Accordingly, directly identifying the textured vegetable protein composite food produced by Production Method 2 by structure or properties is seemed to be very difficult and impractical.

### [Textured Vegetable Protein Composite Food]

The present disclosure further discloses a textured vegetable protein composite food containing a water-absorbable polysaccharide thickener and a water-absorbable textured vegetable protein, wherein, when the textured vegetable protein composite food is formed into a disk having a diameter of 10 mm and a thickness of 1 mm, the number of aggregates of the water-absorbable polysaccharide thickener with a grain size of 0.1 mm or more as observed in one plane is four or less. The number of the aggregates may be, for example, number determined with use of an optical microscope.

The water-absorbable polysaccharide thickener and the textured vegetable protein may be the same ones as described for Production Methods 1 and 2.

The textured vegetable protein composite food of the present disclosure may be unheated or post-heated.

The textured vegetable protein composite food of the present disclosure may contain, when being in an unheated state, 0.1% by mass or more, 0.3% by mass or more, 0.5% by mass or more, 0.7% by mass or more, or 0.9% by mass or more of the water-absorbable polysaccharide thickener. The textured vegetable protein composite food of the present disclosure may contain, when being in an unheated state, 2% by mass or less, 1.8% by mass or less, 1.6% by mass or less, 1.4% by mass or less, or 1.2% by mass or less of the water-absorbable polysaccharide thickener.

Any upper limit value and lower limit value of the amount of the water-absorbable polysaccharide thickener can be combined within the scope of the present disclosure. Typically, if the amount of the water-absorbable polysaccharide thickener is within a proper range, the texture of the textured vegetable protein composite food of the present disclosure is much better.

The textured vegetable protein composite food of the present disclosure may contain, when being in an unheated state, 1% by mass or more, 2% by mass or more, or 3% by mass or more of the textured vegetable protein. The textured vegetable protein composite food of the present disclosure may contain, when being in an unheated state, 20% by mass or less, 15% by mass or less, 10% by mass or less, or 5% by mass or less of the textured vegetable protein.

Any upper limit value and lower limit value of the amount of the textured vegetable protein can be combined within the scope of the present disclosure. Typically, if the amount of the textured vegetable protein is within a proper range, the texture of the textured vegetable protein composite food of the present disclosure is much better.

The textured vegetable protein composite food of the present disclosure is typically a food such that the meat of a processed meat food, such as hamburger steak, meatballs, Chinese dumplings, meatloaf, and tsukune, is at least partly substituted with vegetable protein (processed meat-like food). The processed meat-like food may be for substituting for a processed meat food containing, for example, at least one meat selected from the group consisting of beef, pork, horsemeat, mutton, chevon, and chicken.

The textured vegetable protein composite food of the present disclosure may further contain at least one selected from the group consisting of fruit juice, a vegetable, starch, fat or oil, a seasoning, a spice, a dye, a flavor, and an enzyme.

The textured vegetable protein composite food of the present disclosure can be produced by, for example, Production Method 1 or Production Method 2.

Herein, specific matters described for an embodiment relating to an aspect of the present disclosure may be arbitrarily combined to form a new embodiment, and it should be understood that such new embodiments can be included in the aspect of the present disclosure.

### Examples

Hereinafter, the present disclosure will be more specifically described with reference to Examples and others, but the present disclosure is never limited to those Examples and others.

### [Method and Criteria for Sensory Evaluation]

In all sensory evaluations below, five (six in evaluation of the influence of hydration methods and stirring methods on a water-absorbable polysaccharide thickener) trained special panelists evaluated for evaluation items on the basis of evaluation criteria below. Hamburger steaks used for preparation of the evaluation criteria were as follows.

Reference hamburger steak A: "IKINARI STEAK Beef Hamburger Steak 150 g" (manufacturer: Hokubee Co. Ltd., seller: Pepper Food Service Co., Ltd.)

### Reference hamburger steak B: hamburger steak produced by the following method

Soy-derived granular vegetable protein (NEW FUJINIK 58 (manufactured by FUJI OIL CO., LTD.)) and soaking solution (consisting of 0.84% by mass of table salt, 0.84% by mass of sodium glutamate, and 98.32% by mass of water) in proportions of 28.6% by mass and 71.4% by mass, respectively, were mixed together to give soaked granular vegetable protein. With a food processor, 300 g of the soaked granular vegetable protein and 20 g of a binder (prepared by mixing 30% by mass of rice flour (NEO Riz Farine Premium (manufactured by Gunma Rice Flour Milling Co., Ltd.)), 30% by mass of egg white (Dried Egg White K (manufactured by Kewpie Egg Corporation)), and 40% by mass of water with a food processor) were mixed together until a grain size of 2 to 3 mm or so was reached. The resultant was divided into 20-g portions, which were shaped by putting into metal molds of 30 mm in diameter, and baked in a domestic oven at 180°C for 12 minutes.

### (Easiness in swallowing)

Scores were determined on the basis of number of chewing until a bite of food mass was swallowed. Specifically, 3 points were given for 10 or less times of chewing, 2.5 points for 11 to 15 times of chewing, 2 points for 16 to 20 times of chewing, 1.5 points for 21 to 25 times of chewing, 1 point for 26 to 30 times of chewing, 0.5 points for 31 to 25 times of chewing, 0 points for 36 to 40 times of chewing, -0.5 points for 41 to 45 times of chewing, -1 point for 46 to 50 times of chewing, -1.5 points for 51 to 55 times of chewing, -2 points for 56 to 60 times of chewing, -2.5 points for 61 to 65 times of chewing, and -3 points for 66 or more times of chewing. For example, the mean of number of chewing for five special panelists was 18.8 for reference hamburger steak A and 46 for reference hamburger steak B.

### (True-meat-like texture)

Evaluation criteria for similarity to the texture of hamburger steak with meat were standardized. Specifically, evaluation was performed on true-meat-like texture with 0.5-point increments under common understanding that 3 points are given to reference hamburger steak A and 0 points are given to reference hamburger steak B.

### (Hardness)

Evaluation criteria for hardness in chewing were standardized. Specifically, evaluation was performed on hardness with 0.5-point increments under common understanding that 3 points are given to reference hamburger steak A and -3 points are given to reference hamburger steak B.

### (Elasticity)

Evaluation criteria for elastic sensation in chewing were standardized. Specifically, evaluation was performed on elasticity with 0.5-point increments under common understanding that 3 points are given to reference hamburger steak A and -3 points are given to reference hamburger steak B.

### [Evaluation of Influence of Hydration Methods and Stirring Methods on Water-Absorbable Polysaccharide Thickener]

The influence of hydration methods and stirring methods on a water-absorbable polysaccharide thickener was evaluated for Examples 1 to 6. Table 1 shows ingredients common among Examples 1 to 6. METOLOSE MCE100TS (manufactured by Shin-Etsu Chemical Co., Ltd.), which was used as a water-absorbable polysaccharide thickener, is methylcellulose that has a viscosity of 110000 mm²/s at 20°C when being formulated as a 2% by mass aqueous solution and has thermal gelling ability. Throughout each production, the temperature of a sample was kept at 10°C or less.

**[Table 1]**

| Ingredient | | Blending ratio (%) | Amount of blending (kg) |
|---|---|---|---|
| Methylcellulose | METOLOSE MCE100TS (manufactured by Shin-Etsu Chemical Co., Ltd.) | 1.01 | 2.53 |
| Canola oil | - | 6.74 | 16.84 |
| Cold water 1 | - | 50.52 | 126.31 |
| Fibrous vegetable protein | SUPRO MAX 5010 (manufactured by Solae LLC) | 3.74 | 9.36 |
| Cold water 2 | - | 5.61 | 14.03 |
| Rice flour | NEO Riz Farine Premium (manufactured by Gunma Rice Flour Milling Co., Ltd.) | 2.99 | 7.49 |
| Wheat gluten | A-Glu SS (manufactured by Glico Nutrition Co., Ltd.) | 2.25 | 5.61 |
| Bamboo fiber | UNICELL BF200 (manufactured by InterFiber sp. z.o.o.) | 1.05 | 2.62 |
| Sodium glutamate | - | 1.31 | 3.27 |
| Nucleotide seasoning | WP Double Plus (manufactured by Ajinomoto Co., Inc.) | 0.13 | 0.33 |
| Table salt | - | 0.75 | 1.87 |
| Black pepper | - | 0.07 | 0.19 |
| Coconut oil | - | 6.50 | 16.25 |
| Granular vegetable protein | NEW FUJINIK 49 (manufactured by FUJI OIL CO., LTD.) | 17.32 | 43.30 |
| Total | | 100.00 | 250.00 |

### (Examples 1 to 3: examples with mixer)

Among the ingredients shown in Table 1, methylcellulose, rice flour, wheat gluten, and bamboo fiber were loaded into a mixer (SM-BTM-101TI manufactured by Sun Plant Industry Co., Ltd.), cold water 1 and canola oil were further added, and the resultant was then mixed together. The mixing was performed within 1 minute. Loading methods (hydration methods) for cold water 1 were as shown in Table 2, and the stirring speed of the mixer was 24 rotations/min. While stirring by the mixer was continued, a fibrous vegetable protein that had been allowed to absorb cold water 2 in advance was loaded, and a seasoning consisting of sodium glutamate, a nucleotide seasoning, table salt, and black pepper was further loaded. Finally, coconut oil and a granular vegetable protein were loaded while stirring by the mixer was continued. After loading and mixing of cold water 1, all the residual ingredients were loaded within 2 minutes to complete loading of all of the ingredients, and thereafter stirring was performed under normal temperature and normal pressure for 10 minutes. Each of the resulting mixtures was formed into a disk having a diameter of 10 mm and a thickness of 1 mm, and the condition was observed for one plane by using an optical microscope to find 5 to 10 aggregates derived from methylcellulose, as translucent grains of 0.1 mm or more in diameter, from the mixtures of Example 1 and Example 2. When the disk-shaped mixtures of Example 1 and Example 2 were squashed with the thumb and the index finger, elasticity derived from such aggregates was felt at the tip of each finger. On the other hand, such an aggregate was not found from the mixture of Example 3. Subsequently, the mixtures obtained were each formed into 30 g of a patty having a diameter of 50 mm and a thickness of 30 mm, and the patties were baked in a domestic oven at 240°C for 6 minutes and used for subsequent experiments.

### (Examples 4 to 6: examples with silent cutter)

Among the ingredients shown in Table 1, methylcellulose, rice flour, wheat gluten, and bamboo fiber were loaded into a silent cutter (09AP230AW0155 manufactured by Bibun Corporation), cold water 1 and canola oil were further added, and the resultant was then mixed together. The mixing was performed within 1 minute. Loading methods (hydration methods) for cold water 1 were as shown in Table 2, and the displayed setting of the silent cutter was "High Speed". The resulting mixture was loaded into a mixer (SM-BTM-101TI manufactured by Sun Plant Industry Co., Ltd.), a fibrous vegetable protein that had been allowed to absorb cold water 2 in advance was loaded with stirring, and a seasoning consisting of sodium glutamate, a nucleotide seasoning, table salt, and black pepper was further loaded. Finally, coconut oil and a granular vegetable protein were loaded while stirring by the mixer was continued. After loading of the mixture into the mixer, all the residual ingredients were loaded within 2 minutes to complete loading of all of the ingredients, and thereafter stirring was performed at 30 rotations/min or less under normal temperature and normal pressure for 10 minutes. Each of the resulting mixtures was formed into a disk having a diameter of 10 mm and a thickness of 1 mm, and the condition was observed for one plane by using an optical microscope to find 5 to 10 aggregates derived from methylcellulose, as translucent grains of 0.1 mm or more in diameter, from the mixtures of Example 4 and Example 5. When the disk-shaped mixtures of Example 1 and Example 2 were squashed with the thumb and the index finger, elasticity derived from such aggregates was felt at the tip of each finger. On the other hand, such an aggregate was not found from the mixture of Example 6. Subsequently, the mixtures obtained were each formed into 30 g of a patty having a diameter of 50 mm and a thickness of 30 mm, and the patties were baked in a domestic oven at 240°C for 6 minutes and used for subsequent experiments.

**[Table 2]**

| | Hydration method |
|---|---|
| Examples 1, 4 | Gradually loading over 6 minutes |
| Examples 2, 5 | Separately loading two halves (second loading 2 minutes after first loading) |
| Examples 3, 6 | Loading the whole amount within 20 seconds |

Sensory evaluation on "Hardness" and "Elasticity" was carried out for the hamburger steaks of Examples 1 to 6 obtained. The results are shown in Table 3.

**[Table 3]**

| | Example 1 | Example 2 | Example 3 | Example 4 | Example 5 | Example 6 |
|---|---|---|---|---|---|---|
| Hardness | -1.17 | -0.17 | 1.17 | -1.50 | -0.50 | 0.33 |
| Elasticity | -0.83 | -0.17 | 1.33 | -1.33 | -0.17 | 0.83 |

Physical properties evaluation was carried out by using a TENSIPRESSER (TTP-50BX2-2006 manufactured by Taketomo Electric Inc.) for the hamburger steaks of Examples 1 to 6 obtained. A cylindrical jig having a diameter of 18 mm was vertically penetrated into each hamburger steak from the top surface, and the maximum stress (supposed to correspond to "Hardness" in sensory evaluation) and the ratio of loading area when a load was consecutively applied twice (supposed to correspond to "Elasticity" in sensory evaluation) were measured (N = 3) by using a TPA analysis/measurement program. The core temperature of a hamburger steak in measurement was set to approximately 35°C for all cases. The results obtained are shown in Table 4.

**[Table 4]**

| | | Exampl e 1 | Exampl e 2 | Exampl e3 | Exampl e 4 | Exampl e 5 | Exampl e 6 |
|---|---|---|---|---|---|---|---|
| Maximum stress (N/m²) | Value | 77320 | 78440 | 91655 | 67305 | 77655 | 85090 |
| | Standard deviation | 1870 | 11480 | 12050 | 6190 | 5195 | 5601 |
| Ratio of loading area | Value | 0.518 | 0.518 | 0.546 | 0.496 | 0.513 | 0.522 |
| | Standard deviation | 0.005 | 0.009 | 0.005 | 0.020 | 0.020 | 0.009 |

It was revealed from the results of the sensory evaluation and physical properties evaluation that significantly higher ratings of "Hardness" and "Elasticity" result by quickly adding water to a water-absorbable polysaccharide thickener (methylcellulose). In addition, it was revealed that higher ratings of "Hardness" and "Elasticity" result by employing a mild mixing method with a mixer.

### [Evaluation of Influence of Ratio of Amounts of Water Added]

The influence of the mass ratio between the amount of water to be added in the step (1) and the total amount of water to be added in the step (2) was evaluated as follows. Evaluation was carried out for 0.11% by mass, 0.51% by mass, 1.01% by mass, 1.51% by mass, and 2.00% by mass of methylcellulose blended as a water-absorbable polysaccharide thickener, and for A:B = 5:5, 6:4, 7:3, 8:2, and 9:1 as the mass ratios between the amount of water to be added in the step (1), A, and the total amount of water to be added in the step (2), B. Table 5 is a correspondence table showing to which of Examples 7 to 31 a combination of the amount of methylcellulose blended and a mass ratio, A:B, corresponds. Ingredients used for Examples 7 to 31 are shown in Table 6.

**[Table 5]**

| | | Mass ratio, A:B | | | | |
|---|---|---|---|---|---|---|
| | | 5:5 | 6:4 | 7:3 | 8:2 | 9:1 |
| Amount of methylcellulose blended | 0.11% by mass | example 7 | example 8 | example 9 | example 10 | example 11 |
| | 0.51% by mass | example 12 | example 13 | example 14 | example 15 | example 16 |
| | 1.01% by mass | example 17 | example 18 | example 19 | example 20 | example 21 |
| | 1.51% by mass | example 22 | example 23 | example 24 | example 25 | example 26 |
| | 2.00% by mass | example 27 | example 28 | example 29 | example 30 | example 31 |

**[Table 6]**

| Ingredient | | Amount of blending (kg) |
|---|---|---|
| Methylcellulose | METOLOSE MCE100TS (manufactured by Shin-Etsu Chemical Co., Ltd.) | Examples 7-11: 0.28 |
| | | Examples 12-16: 1.35 |
| | | Examples 17-21: 2.70 |
| | | Examples 22-26: 4.05 |
| | | Examples 27-31: 5.40 |
| Canola oil | - | 18.00 |
| Cold water 1 | - | Examples 7,12,17,22,27: |
| | | 75.00 |
| | | Examples 8,13,18,23,28: |
| | | 90.00 |
| | | Examples 9,14,19,24,29: |
| | | 105.00 |
| | | Examples 10,15,20,25,30: |
| | | 120.00 |
| | | Examples 11,16,21,26,31: |
| | | 135.00 |
| Fibrous vegetable protein | SUPRO MAX 5010 (manufactured by Solae LLC) | 10.00 |
| Cold water 2 | - | Examples 7,12,17,22,27: |
| | | 75.00 |
| | | Examples 8,13,18,23,28: |
| | | 60.00 |
| | | Examples 9,14,19,24,29: |
| | | 45.00 |
| | | Examples 10,15,20,25,30: |
| | | 30.00 |
| | | Examples 11,16,21,26,31: |
| | | 15.00 |
| Rice flour | NEO Riz Farine Premium (manufactured by Gunma Rice Flour Milling Co., Ltd.) | 8.00 |
| Wheat gluten | A-Glu SS (manufactured by Glico Nutrition Co., Ltd.) | 6.00 |
| Bamboo fiber | UNICELL BF200 (manufactured by InterFiber sp. z.o.o.) | 2.80 |
| Sodium glutamate | - | 3.50 |
| Nucleotide seasoning | WP Double Plus (manufactured by Ajinomoto Co., Inc.) | 0.35 |
| Table salt | - | 2.00 |
| Black pepper | - | 0.20 |
| Coconut oil | - | 17.37 |
| Granular vegetable protein | NEW FUJINIK 49 (manufactured by FUJI OIL CO., LTD.) | 46.28 |

Among the ingredients shown in Table 6, methylcellulose, rice flour, wheat gluten, and bamboo fiber were loaded into a mixer (KENMIX CHEF KM-300 manufactured by AIKO FACTORY CO., LTD. with an aluminum beater as a jig), and cold water 1 and canola oil were further added and mixed together. The mixing was performed within 1 minute. While stirring by the mixer was continued, a fibrous vegetable protein that had been allowed to absorb cold water 2 in advance was loaded, and a seasoning consisting of sodium glutamate, a nucleotide seasoning, table salt, and black pepper was further loaded. Finally, coconut oil and a granular vegetable protein were loaded while stirring by the mixer was continued. After loading and mixing of cold water 1, all the residual ingredients were loaded within 2 minutes to complete loading of all of the ingredients, and thereafter stirring was performed at 30 rotations/min or less under normal temperature and normal pressure for 1 minute. The mixtures obtained were each formed into 30 g of a patty having a diameter of 50 mm and a thickness of 30 mm, and the patties were baked in a domestic oven at 240°C for 6 minutes.

Sensory evaluation on "Easiness in swallowing", "True-meat-like texture", "Hardness", and "Elasticity" was carried out for the hamburger steaks of Examples 7 to 31 obtained. The results are shown in Table 7 to Table 10.

**[Table 7]**

| Easiness in swallowing | | Mass ratio, A:B | | | | |
|---|---|---|---|---|---|---|
| | | 5:5 | 6:4 | 7:3 | 8:2 | 9:1 |
| Amount of methylcellulose blended | 0.11% by mass | 1.00 | 1.00 | 1.25 | 1.38 | 1.75 |
| | 0.51 % by mass | 0.88 | 0.88 | 1.25 | 1.50 | 1.75 |
| | 1.01% by mass | 0.38 | 0.63 | 1.00 | 1.50 | 1.88 |
| | 1.51% by mass | 0.38 | 0.38 | 0.63 | 1.25 | 1.13 |
| | 2.00% by mass | -0.88 | -0.88 | -0.63 | -1.13 | -1.75 |

**[Table 8]**

| True-meat-like texture | | Mass ratio, A:B | | | | |
|---|---|---|---|---|---|---|
| | | 5:5 | 6:4 | 7:3 | 8:2 | 9:1 |
| Amount of methylcellulose blended | 0.11% by mass | 0.00 | 0.00 | 0.00 | 0.13 | 0.63 |
| | 0.51% by mass | 0.13 | 0.13 | 0.38 | 1.13 | 1.50 |
| | 1.01% by mass | 0.38 | 0.88 | 1.13 | 1.75 | 2.38 |
| | 1.51% by mass | 0.50 | 0.88 | 1.38 | 1.38 | 1.63 |
| | 2.00% by mass | 0.25 | 0.75 | 1.00 | 0.63 | 0.25 |

**[Table 9]**

| Hardness | | Mass ratio, A:B | | | | |
|---|---|---|---|---|---|---|
| | | 5:5 | 6:4 | 7:3 | 8:2 | 9:1 |
| Amount of methylcellulose blended | 0.11% by mass | -0.75 | -0.13 | 0.13 | 0.63 | 1.00 |
| | 0.51% by mass | -0.38 | 0.13 | 0.25 | 0.75 | 1.25 |
| | 1.01% by mass | 0.75 | 0.88 | 1.13 | 1.38 | 2.00 |
| | 1.51% by mass | 1.25 | 1.63 | 1.88 | 2.13 | 2.75 |
| | 2.00% by mass | 2.13 | 2.25 | 2.63 | 2.75 | 3.00 |

**[Table 10]**

| Elasticity | | Mass ratio, A:B | | | | |
|---|---|---|---|---|---|---|
| | | 5:5 | 6:4 | 7:3 | 8:2 | 9:1 |
| Amount of methylcellulose blended | 0.11% by mass | -1.38 | -0.75 | 0.00 | 0.38 | 0.88 |
| | 0.51% by mass | -0.75 | -0.38 | 0.13 | 0.50 | 1.00 |
| | 1.01% by mass | 0.25 | 0.50 | 0.63 | 1.00 | 1.63 |
| | 1.51% by mass | 0.75 | 1.00 | 1.75 | 2.13 | 2.38 |
| | 2.00% by mass | 1.25 | 1.50 | 2.00 | 2.50 | 2.75 |

It was revealed from the results of the sensory evaluation that much better texture can be achieved by properly setting the amount of methylcellulose to be blended and the mass ratio between the amount of water to be added in the step (1), A, and the total amount of water to be added in the step (2), B, A:B.

### [Evaluation of Influence of Type of Water-Absorbable Polysaccharide Thickener]

The influence of the type of a water-absorbable polysaccharide thickener was evaluated with Examples 32 to 37. Ingredients used for Examples 32 to 37 are shown in Table 11. METOLOSE MCE100TS and METOLOSE MCE4000 (manufactured by Shin-Etsu Chemical Co., Ltd.) are respectively methylcelluloses that have a viscosity of 110000 mm²/s and that of 4000 mm²/s at 20°C when being formulated as a 2% by mass aqueous solution and have thermal gelling ability. Carrageenin CSK-1 (F) (manufactured by San-Ei Gen F.F.I., Inc.) is carrageenan. Gel Up J-1630 (manufactured by San-Ei Gen F.F.I., Inc.) is agar. Bistop D-2029 (manufactured by San-Ei Gen F.F.I., Inc.) is guar gum.

**[Table 11]**

| Ingredient | | Amount of blending (kg) |
|---|---|---|
| Water-absorbable polysaccharide thickener | Example 32: METOLOSE MCE100TS (manufactured by Shin-Etsu Chemical Co., Ltd.) | 3.20 |
| | Example 33: METOLOSE MCE4000 (manufactured by Shin-Etsu Chemical Co., Ltd.) | |
| | Example 34: Carrageenin CSK-1 (F) (manufactured by San-Ei Gen F.F.I., Inc.) | |
| | Example 35: Gel Up J-1630 (manufactured by San-Ei Gen F.F.I., Inc.) | |
| | Example 36: Bistop D-2029 (manufactured by San-Ei Gen F.F.I., Inc.) | |
| | Example 37: Sodium alginate 80-120 (manufactured by FUJIFILM Wako Pure Chemical Corporation) | |
| Canola oil | - | 18.00 |
| Cold water 1 | - | 127.50 |
| Fibrous vegetable protein | SUPRO MAX 5010 (manufactured by Solae LLC) | 10.00 |
| Cold water 2 | - | 22.50 |
| Rice flour | NEO Riz Farine Premium (manufactured by Gunma Rice Flour Milling Co., Ltd.) | 8.00 |
| Wheat gluten | A-Glu SS (manufactured by Glico Nutrition Co., Ltd.) | 6.00 |
| Bamboo fiber | UNICELL BF200 (manufactured by InterFiber sp. z.o.o.) | 2.80 |
| Sodium glutamate | - | 3.50 |
| Nucleotide seasoning | WP Double Plus (manufactured by Ajinomoto Co., Inc.) | 0.35 |
| Table salt | - | 2.00 |
| Black pepper | - | 0.20 |
| Coconut oil | - | 17.37 |
| Granular vegetable protein | NEW FUJINIK 49 (manufactured by FUJI OIL CO., LTD.) | 46.28 |

Among the ingredients shown in Table 11, a water-absorbable polysaccharide thickener, rice flour, wheat gluten, and bamboo fiber were loaded into a mixer (KENMIX CHEF KM-300 manufactured by AIKO FACTORY CO., LTD. with an aluminum beater as a jig), and cold water 1 and canola oil were further added and mixed together. The mixing was performed within 1 minute. While stirring by the mixer was continued, a fibrous vegetable protein that had been allowed to absorb cold water 2 in advance was loaded, and a seasoning consisting of sodium glutamate, a nucleotide seasoning, table salt, and black pepper was further loaded. Finally, coconut oil and a granular vegetable protein were loaded while stirring by the mixer was continued. After loading and mixing of cold water 1, all the residual ingredients were loaded within 2 minutes to complete loading of all of the ingredients, and thereafter stirring was performed at 30 rotations/min or less under normal temperature and normal pressure for 1 minute. The mixtures obtained were each formed into 30 g of a patty having a diameter of 50 mm and a thickness of 30 mm, and the patties were baked in a domestic oven at 240°C for 6 minutes.

Sensory evaluation on "Easiness in swallowing", "True-meat-like texture", "Hardness", and "Elasticity" was carried out for the hamburger steaks of Examples 32 to 37 obtained. The results are shown in Table 12.

**[Table 12]**

| | Example 32 | Example 33 | Example 34 | Example 35 | Example 36 | Example 37 |
|---|---|---|---|---|---|---|
| Easiness in swallowing | 0.75 | 1.00 | -1.63 | -1.50 | 0.88 | 1.00 |
| True-meat-like texture | 2.13 | 1.50 | 0.50 | 0.00 | 0.50 | 0.00 |
| Hardness | 1.50 | 1.00 | -0.13 | -0.25 | -0.13 | -0.88 |
| Elasticity | 1.75 | 1.25 | 0.25 | -0.50 | 0.33 | -1.00 |

It was demonstrated from the results of the sensory evaluation that comprehensively excellent texture can be imparted to a textured vegetable protein composite food by using, in particular, methylcellulose having thermal gelling ability among water-absorbable polysaccharide thickeners. In addition, it was demonstrated that more comprehensively excellent texture can be imparted to a textured vegetable protein composite food by using methylcellulose having a viscosity of 5000 mm²/s or more at 20°C when being formulated as a 2% by mass aqueous solution among methylcelluloses having thermal gelling ability.

### [Evaluation of Influence of Type of Water-Absorbable Textured Vegetable Protein]

The influence of the type of a water-absorbable textured vegetable protein was evaluated with Examples 38 to 41. Ingredients used for Examples 38 to 41 are shown in Table 13. APEX 950 (manufactured by FUJI OIL CO., LTD.) is a granular vegetable protein derived primarily from soy, NATURALYS T70S (manufactured by Roquette) is a fibrous vegetable protein derived primarily from peas, Lory Tex Fibres SCS 110 (manufactured by Loryma GmbH) is a fibrous vegetable protein derived primarily from wheat, and SUPRO MAX 5010 (manufactured by Solae LLC) is a fibrous vegetable protein derived primarily from soy.

**[Table 13]**

| Ingredient | | Amount of blending (kg) |
|---|---|---|
| Methylcellulose | METOLOSE MCE100TS (manufactured by Shin-Etsu Chemical Co., Ltd.) | 3.20 |
| Canola oil | - | 18.00 |
| Cold water 1 | - | 127.50 |
| Fibrous vegetable protein | Example 38: APEX 950 (manufactured by FUJI OIL CO., LTD.) | 10.00 |
| | Example 39: NATURALYS T70S (manufactured by Roquette) | |
| | Example 40: Lory Tex Fibres SCS 110 (manufactured by Loryma GmbH) | |
| | Example 41: SUPRO MAX 5010 (manufactured by Solae LLC) | |
| Cold water 2 | - | 22.50 |
| Rice flour | NEO Riz Farine Premium (manufactured by Gunma Rice Flour Milling Co., Ltd.) | 8.00 |
| Wheat gluten | A-Glu SS (manufactured by Glico Nutrition Co., Ltd.) | 6.00 |
| Bamboo fiber | UNICELL BF200 (manufactured by InterFiber sp. z.o.o.) | 2.80 |
| Sodium glutamate | - | 3.50 |
| Nucleotide seasoning | WP Double Plus (manufactured by Ajinomoto Co., Inc.) | 0.35 |
| Table salt | - | 2.00 |
| Black pepper | - | 0.20 |
| Coconut oil | - | 17.37 |
| Granular vegetable protein | NEW FUJINIK 49 (manufactured by FUJI OIL CO., LTD.) | 46.28 |

Among the ingredients shown in Table 13, methylcellulose, rice flour, wheat gluten, and bamboo fiber were loaded into a mixer (KENMIX CHEF KM-300 manufactured by AIKO FACTORY CO., LTD. with an aluminum beater as a jig), and cold water 1 and canola oil were further added and mixed together. The mixing was performed within 1 minute. While stirring by the mixer was continued, a fibrous vegetable protein that had been allowed to absorb cold water 2 in advance was loaded, and a seasoning consisting of sodium glutamate, a nucleotide seasoning, table salt, and black pepper was further loaded. After loading and mixing of cold water 1, all the residual ingredients were loaded within 2 minutes to complete loading of all of the ingredients, and thereafter stirring was performed at 30 rotations/min or less under normal temperature and normal pressure for 1 minute. Finally, coconut oil and a granular vegetable protein were loaded while stirring by the mixer was continued. The mixtures obtained were each formed into 30 g of a patty having a diameter of 50 mm and a thickness of 30 mm, and the patties were baked in a domestic oven at 240°C for 6 minutes.

Sensory evaluation on "Easiness in swallowing", "Hardness", and "Elasticity" was carried out for the hamburger steaks of Examples 38 to 41 obtained. The results are shown in Table 14.

**[Table 14]**

| | Example 38 | Example 39 | Example 40 | Example 41 |
|---|---|---|---|---|
| Easiness in swallowing | 0.17 | 0.67 | 0.17 | 1.00 |
| Hardness | 0.67 | 0.83 | 0.50 | 0.83 |
| Elasticity | 0.83 | 1.33 | 0.83 | 1.50 |

It was demonstrated from the results of the sensory evaluation that comprehensively excellent texture can be imparted to a textured vegetable protein composite food by using a fibrous vegetable protein derived primarily from soy among water-absorbable textured vegetable proteins.

### Industrial Applicability

The production method of the present disclosure for a textured vegetable protein composite food and the textured vegetable protein composite food of the present disclosure are preferably applicable in the industrial field of foods such that the meat of a processed meat food is at least partly substituted with vegetable protein.

## Claims

1. A production method for a textured vegetable protein composite food comprising a water-absorbable polysaccharide thickener and a water-absorbable textured vegetable protein, the production method comprising:
(1) a step of allowing the water-absorbable polysaccharide thickener to absorb water by adding water thereto in the absence of the water-absorbable textured vegetable protein to give a hydrated polysaccharide thickener; and
(2) a step of adding the water-absorbable textured vegetable protein to the hydrated polysaccharide thickener and mixing together to give a textured vegetable protein composite, wherein,
in the step (1), 80% by mass or more of water to be used in the step (1) is added to 1 kg or more of the water-absorbable polysaccharide thickener within 30 seconds.

2. The production method according to claim 1, wherein an amount of water to be added in the step (1), A, is 10 to 500 parts by mass per part by mass of the water-absorbable polysaccharide thickener to be used in the step (1).

3. The production method according to claim 1 or 2, wherein the water-absorbable polysaccharide thickener is powdery.

4. The production method according to claim 1 or 2, wherein the water-absorbable polysaccharide thickener contains at least one selected from the group consisting of methylcellulose, hydroxypropylmethylcellulose, pectin, carrageenan, xanthan gum, agar, guar gum, gum arabic, and sodium alginate.

5. The production method according to claim 1 or 2, wherein the water-absorbable polysaccharide thickener has thermal gelling ability as a property to gel on being heated in an aqueous solution.

6. The production method according to claim 1 or 2, wherein a viscosity of the water-absorbable polysaccharide thickener at 20°C when being formulated as a 2% by mass aqueous solution is 2000 mm²/s or more.

7. The production method according to claim 1 or 2, wherein the water-absorbable textured vegetable protein contains a granular vegetable protein or a fibrous vegetable protein.

8. The production method according to claim 1 or 2, wherein the water-absorbable textured vegetable protein contains a textured vegetable protein derived from soy, peas, wheat, or a combination of any of them.

9. The production method according to claim 1 or 2, wherein water is added in the step (2).

10. The production method according to claim 9, wherein, in the step (2), the water-absorbable textured vegetable protein is allowed to absorb water in advance by adding water thereto to give a hydrated textured vegetable protein, and the hydrated textured vegetable protein is then added to the hydrated polysaccharide thickener and mixed together to give the textured vegetable protein composite.

11. The production method according to claim 9, wherein a total amount of water to be added in the step (2), B, is 0.5 to 20 parts by mass per part by mass of the water-absorbable textured vegetable protein to be used in the step (2).

12. The production method according to claim 9, wherein an amount of water to be added in the step (1), A, and a total amount of water to be added in the step (2), B, satisfy A:B = 4.5:5.5 to 9.9:0.1 in a mass ratio.

13. The production method according to claim 1 or 2, wherein an amount of the water-absorbable polysaccharide thickener to be used in the step (1) is 0.02 to 0.6 parts by mass per part by mass of the water-absorbable textured vegetable protein to be used in the step (2).

14. The production method according to claim 1 or 2, comprising no heating step for the water-absorbable polysaccharide thickener before the step (2) is completed, and the textured vegetable protein composite food remains unheated after addition of the water-absorbable polysaccharide thickener.

15. The production method according to claim 1 or 2, further comprising a step of heating the textured vegetable protein composite after the step (2).

16. The production method according to claim 15, wherein, before the heating, the textured vegetable protein composite contains 0.1 to 2% by mass of the water-absorbable polysaccharide thickener used in the step (1).

17. The production method according to claim 15, wherein, before the heating, the textured vegetable protein composite contains 1 to 20% by mass of the water-absorbable textured vegetable protein used in the step (2).

18. The production method according to claim 1 or 2, wherein, in the step (1), mixing is performed by using one or more methods selected from the group consisting of a method with a mixing stirrer, a method of stirring at a stirring speed of 30 rotations/min or less, and a method of employing a stirring time of 15 minutes or less while and/or after the water-absorbable polysaccharide thickener is allowed to absorb water by adding water thereto.

19. The production method according to claim 1 or 2, wherein the textured vegetable protein composite food is a processed meat-like food.

20. The production method according to claim 19, wherein the processed meat-like food is for substituting for a processed meat food containing meat.

21. The production method according to claim 1 or 2, comprising a step of additionally mixing at least one selected from the group consisting of fruit juice, a vegetable, starch, fat or oil, a seasoning, a spice, a dye, a flavor, and an enzyme.

22. A textured vegetable protein composite food produced by the production method according to claim 1 or 2.

23. A production method for a textured vegetable protein composite food comprising a water-absorbable polysaccharide thickener and a water-absorbable textured vegetable protein, the production method comprising:
(1) a step of allowing the water-absorbable polysaccharide thickener to absorb water by adding water thereto in the absence of the water-absorbable textured vegetable protein to give a hydrated polysaccharide thickener; and
(2) a step of adding the water-absorbable textured vegetable protein and water to the hydrated polysaccharide thickener and mixing together to give a textured vegetable protein composite, wherein,
in the step (2), water is (a) added as a hydrated textured vegetable protein given in advance by allowing the water-absorbable textured vegetable protein to absorb water to the hydrated polysaccharide thickener, and/or (b) added to the hydrated polysaccharide thickener simultaneously with the water-absorbable textured vegetable protein, and/or (c) added to the hydrated polysaccharide thickener after addition of the water-absorbable textured vegetable protein, and
an amount of water to be added in the step (1), A, and a total amount of water to be added in the step (2), B, satisfy A:B = 4.5:5.5 to 9.9:0.1 in a mass ratio.

24. The production method according to claim 23, wherein the amount of water to be added in the step (1), A, is 10 to 500 parts by mass per part by mass of the water-absorbable polysaccharide thickener to be used in the step (1).

25. The production method according to claim 23 or 24, wherein the water-absorbable polysaccharide thickener is powdery.

26. The production method according to claim 23 or 24, wherein the water-absorbable polysaccharide thickener contains at least one selected from the group consisting of methylcellulose, hydroxypropylmethylcellulose, pectin, carrageenan, xanthan gum, agar, guar gum, gum arabic, and sodium alginate.

27. The production method according to claim 23 or 24, wherein the water-absorbable polysaccharide thickener has thermal gelling ability as a property to gel on being heated in an aqueous solution.

28. The production method according to claim 23 or 24, wherein a viscosity of the water-absorbable polysaccharide thickener at 20°C when being formulated as a 2% by mass aqueous solution is 2000 mm²/s or more.

29. The production method according to claim 23 or 24, wherein the water-absorbable textured vegetable protein contains a granular vegetable protein or a fibrous vegetable protein.

30. The production method according to claim 23 or 24, wherein the water-absorbable textured vegetable protein contains a textured vegetable protein derived from soy, peas, wheat, or a combination of any of them.

31. The production method according to claim 23 or 24, wherein the total amount of water to be added in the step (2), B, is 0.5 to 20 parts by mass per part by mass of the water-absorbable textured vegetable protein to be used in the step (2).

32. The production method according to claim 23 or 24, wherein, in the step (1), 80% by mass or more of water to be used in the step (1) is added to 1 kg or more of the water-absorbable polysaccharide thickener within 30 seconds.

33. The production method according to claim 23 or 24, wherein an amount of the water-absorbable polysaccharide thickener to be used in the step (1) is 0.02 to 0.6 parts by mass per part by mass of the water-absorbable textured vegetable protein to be used in the step (2).

34. The production method according to claim 23 or 24, comprising no heating step for the water-absorbable polysaccharide thickener before the step (2) is completed, and the textured vegetable protein composite food remains unheated after addition of the water-absorbable polysaccharide thickener.

35. The production method according to claim 23 or 24, further comprising a step of heating the textured vegetable protein composite after the step (2).

36. The production method according to claim 35, wherein, before the heating, the textured vegetable protein composite contains 0.1 to 2% by mass of the water-absorbable polysaccharide thickener used in the step (1).

37. The production method according to claim 35, wherein, before the heating, the textured vegetable protein composite contains 1 to 20% by mass of the water-absorbable textured vegetable protein added in the step (2).

38. The production method according to claim 23 or 24, wherein, in the step (1), mixing is performed by using one or more methods selected from the group consisting of a method with a mixing stirrer, a method of stirring at a stirring speed of 30 rotations/min or less, and a method of employing a stirring time of 15 minutes or less while and/or after the water-absorbable polysaccharide thickener is allowed to absorb water by adding water thereto.

39. The production method according to claim 23 or 24, wherein the textured vegetable protein composite food is a processed meat-like food.

40. The production method according to claim 39, wherein the processed meat-like food is for substituting for a processed meat food containing meat.

41. The production method according to claim 23 or 24, comprising a step of additionally mixing at least one selected from the group consisting of fruit juice, a vegetable, starch, fat or oil, a seasoning, a spice, a dye, a flavor, and an enzyme.

42. A textured vegetable protein composite food produced by the production method according to claim 23 or 24.

43. A textured vegetable protein composite food comprising a water-absorbable polysaccharide thickener and a water-absorbable textured vegetable protein, wherein, when the textured vegetable protein composite food is formed into a disk having a diameter of 10 mm and a thickness of 1 mm, number of aggregates of the water-absorbable polysaccharide thickener with a grain size of 0.1 mm or more as observed in one plane is four or less.

44. The textured vegetable protein composite food according to claim 43, wherein the number of the aggregates is number determined with use of an optical microscope.

45. The textured vegetable protein composite food according to claim 43 or 44, wherein the water-absorbable polysaccharide thickener contains at least one selected from the group consisting of methylcellulose, hydroxypropylmethylcellulose, pectin, carrageenan, xanthan gum, agar, guar gum, gum arabic, and sodium alginate.

46. The textured vegetable protein composite food according to claim 43 or 44, wherein the water-absorbable polysaccharide thickener has thermal gelling ability as a property to gel on being heated in an aqueous solution.

47. The textured vegetable protein composite food according to claim 43 or 44, wherein a viscosity of the water-absorbable polysaccharide thickener at 20°C when being formulated as a 2% by mass aqueous solution is 2000 mm²/s or more.

48. The textured vegetable protein composite food according to claim 43 or 44, wherein the water-absorbable textured vegetable protein contains a granular vegetable protein or a fibrous vegetable protein.

49. The textured vegetable protein composite food according to claim 43 or 44, wherein the water-absorbable textured vegetable protein contains a textured vegetable protein derived from soy, peas, wheat, or a combination of any of them.

50. The textured vegetable protein composite food according to claim 43 or 44, comprising 0.1 to 2% by mass of the water-absorbable polysaccharide thickener.

51. The textured vegetable protein composite food according to claim 43 or 44, comprising 1 to 20% by mass of the water-absorbable textured vegetable protein.

52. The textured vegetable protein composite food according to claim 43 or 44, being a processed meat-like food.

53. The textured vegetable protein composite food according to claim 52, wherein the processed meat-like food is for substituting for a processed meat food containing meat.

54. The textured vegetable protein composite food according to claim 43 or 44, being unheated.

55. The textured vegetable protein composite food according to claim 43 or 44, further comprising at least one selected from the group consisting of water, fruit juice, a vegetable, starch, fat or oil, a seasoning, a spice, a dye, a flavor, and an enzyme.
